# EUROPEAN PATENT SPECIFICATION

(11) **EP 2 956 722 B1**
(45) Date of publication and mention of the grant of the patent: **20.09.2023**
(21) Application number: 14711838.4
(22) Date of filing: 18.02.2014
(51) Int. Cl.: F24D 3/08, F24D 11/00, F24D 19/10, F28D 20/00

(54) **WATER HEATING APPARATUS**
WASSERERWÄRMUNGSVORRICHTUNG
APPAREIL CHAUFFANT L'EAU

(30) Priority: 18.02.2013 GB 201302761
(43) Date of publication of application: 23.12.2015
(73) Proprietor: Ideal Boilers Limited, Kingston-Upon-Hull East Yorkshire HU5 4JN (GB)
(72) Inventor: KIRBY, Neil R J, Cottingham East Yorkshire HU20 9US (GB)
(74) Representative: Wilson Gunn
(86) International application number: PCT/GB2014/050464
(87) International publication number: WO 2014/125306

(56) References cited:
- EP-A1- 0 358 041
- EP-A1- 2 216 609
- EP-A1- 2 290 300
- WO-A1-2008/007968
- WO-A2-2011/133058
- DE-A1-102009 007 053
- GB-A- 2 463 512
- US-A- 4 364 239
- US-A- 4 527 618

## Description

### Technical field of the invention

This invention relates to thermal store apparatus, water heating apparatus and systems, and methods for heating water.

### Background to the invention

Thermal stores are used as a way of storing and managing heat until it is needed. In a domestic setting this heat is usually stored in water in large, insulated cylinders or tanks. Domestic thermal stores may contain one or more heat exchangers, and/or heating elements such as an emersion heater.

Known thermal stores generally take input from a number of different heat sources, such as heat from boilers, solar water heating and heat pumps. A thermal store can provide hot water for both space (central) heating and hot water (mains pressure, header tanks, or other systems), but in some systems the thermal store provides hot water for only one of space heating or domestic hot water.

The benefits of using a thermal store include enabling relatively low temperature or low energy heat to be used by providing a place where heated water can then be circulated and heated further if necessary by secondary heating sources such as conventional boilers or electric emersion heaters.

It is also known to produce combined heat and power (CHP) in which heat that is produced during electricity production is captured and reused while a conventional heating source is also employed.

Fuel cells generate electricity from a fuel such as natural gas, and as a byproduct produce waste heat. If the fuel cell or other heat source such as solar is used in conventional thermal stores that have multiple heat inputs and which utilise a single volume of water which is itself not circulated through the fuel cell, solar source etc., the volume of water must be maintained at a high enough temperature to satisfy any heat demands placed upon it. When a low energy source such as the fuel cell waste heat or solar energy on a cool day is used to heat water in a thermal store, it cannot individually be relied upon to reheat the thermal store after a heat demand, in known apparatus. Consequently a conventional boiler or immersion heater is used to reheat the volume in the thermal store rapidly. This satisfies a user's comforts demands but denies the waste heat from the fuel cell or solar system any significant capacity for storage. As a thermal store temperature increases the reduced temperature gradient for the waste heat from the fuel cell or solar system means it becomes less effective at storing its energy. Heat energy from a fuel cell can also be lost to the flue connected to the apparatus.

Fuel cells can have relatively high electrical efficiencies of around 50% plus. However, fuel cell life spans are reduced when cycled on/off and it is therefore desirable to run them continuously. It would therefore be an advantage to utilise a fuel cell to cycle waste heat to a thermal store which is kept as cool as possible through heat demand, to maximise the efficiency at which waste heat is captured.

Solar systems are normally sized to meet domestic hot water (DHW) demands but are dependant on weather conditions. In weather conditions with cloud cover the output is unlikely to meet the DHW demands and other heating methods are relied upon.

It is also recognised that although consumer demand for evermore energy efficient products is increasing, this should not be at the cost of reduced comfort. There is therefore a need to optimise the use of energy while satisfying consumer heat demands.

It is therefore an aim of embodiments of the invention to provide a thermal store apparatus which includes a relatively constant thermal gradient, whilst maximising the efficiency at which waste heat from a fuel cell or energy from a solar system is absorbed.

It would also be beneficial to provide an apparatus that on a cloudy day enables the recovered energy from a low or variable heat source such as a solar heat source to be maximised in the form of preheating DHW prior to passing through a conventionally heated DHW store.

It is a further aim of embodiments of the invention to overcome any of the problems of the prior art, whether described herein or not.

Document US 4 527 618 A discloses a thermal store apparatus according the preamble of claim 1.

### Summary of the invention

According to a first aspect of the invention there is provided a thermal store apparatus comprising the features of claim 1.

In this way water contained within the thermal store itself is heated and returned to the store, and removes the need for a separate heat exchanger or pipework system within the store.

By "variable heat source" we mean a heat source in which the heat generated is not constant and may comprise periods of lower heat generation or cessation of heat generation, depending on technical or environmental conditions. Examples of variable heat sources include solar heat sources, geothermal heat sources, wind generated-heat sources, tidal heat sources and the like.

By "low heat source" we mean a source which may not provide all of the heat necessary to heat a thermal store to its maximum temperature, or which may provide heat which adjusts in power depending on the temperature of the thermal store. Examples of a low heat source include a fuel cell, from which waste heat is recovered, or a heat recovery device, connected to another heat source (such as a fuel cell, solar heat system or the like).

The heated water returned to the tank is the sole means to heat water in the tank.

The apparatus may comprise a heat recovery device, arranged to be connected in use to the heat source.

The low heat source may be a fuel cell. The heat recovery device may be a fuel cell heat recovery device. The heat recovery device may comprise a coiled tube carrying water to be heated. The coiled tube may be held in a container through which passes hot waste flue products from a combined heat and power system.

In some embodiments the variable heat source is a solar heat system, such as comprising solar panels and the like, which may effect heat transfer from sunlight to water.

In this way waste heat from a relatively low or variable heat source such as a fuel cell or solar heat system can be used to heat up relatively colder water from the bottom of the tank and return heated water to an upper region where it can be drawn off to provide hot water for any desired purpose, such as for domestic hot water or central heating radiators. The heat source, such as a fuel cell or solar panel can also be arranged to run continuously, to maximise its efficiency. The transfer of heated water to the upper region of the tank ensures that a thermal gradient, caused by stratification, is maintained, so that there is relatively little reduction in the effectiveness in transfer of heat from the heat recovery device or solar heat system, compared to conventional thermal stores, and less energy is lost to the environment.

The water circulation system may comprise a pump arranged in use to pump water from a first water outlet of the storage tank, through a connected low or variable heat source or heat recovery device and to a first water inlet of the storage tank. The storage tank first water outlet is located at the lower 25%, 15% or 10% of the storage tank and the first water inlet is located at the upper 50%, 25%, 15% or 10% of the storage tank.

The thermal storage tank also comprises means to connect it to a hot water circulation system, such as a domestic central heating system, for example, which may comprise a heat exchanger to enable the transfer of energy from the thermal store water to the central heating system, and arranged in use to receive return water from a hot water circulation system, and return water to the hot water circulation system. The hot water circulation system may include any suitable water conduits, pumps, radiators and the like, for example.

The thermal storage tank may comprise means to connect it to more than one hot water circulation system, for example to both a domestic hot water system and a domestic central heating system, for example. The thermal storage tank comprises domestic hot water system connection means, which comprise a cold water inlet and a domestic hot water outlet. The storage tank comprises a heat transfer conduit therethrough, connected at either end to the cold water inlet and domestic hot water outlet. In this way, cold water from a domestic supply will pass through the heat transfer conduit, where heat is transferred from hot water within the storage tank, and the hot water may then exit the domestic hot water outlet. The thermal store apparatus further comprises a domestic hot water storage tank, connected to the domestic hot water outlet of the thermal storage tank.

The thermal storage tank apparatus comprises a low or volatile heat source connected thereto. The low or volatile heat source may comprise a fuel cell or solar heat system and may further comprise a heat recovery device.

According to an embodiment there is provided a heating apparatus comprising a thermal storage apparatus of the first aspect of the invention connected to low or volatile heat source, and further comprising a boiler.

The boiler comprises means to be operably connected to one or more hot water circulation systems, in use. The heating apparatus may comprise one or more switches or thermostats which, in use, are arranged to switch circulation of water through conduits for the purpose of either supplying energy into the central heating system or the domestic hot water system from the boiler or alternatively supplying energy from the thermal store to the central heating system. In this way if usable energy in the form hot water is available in the thermal storage tank, it can be used to preheat the central heating system via an heat exchanger or supply hot water through the or each hot water circulation system. If it is determined that there is insufficient hot water in the thermal storage tank, or the water is not hot enough, water will not be circulated from the thermal store to the heat exchanger in the central heating system, in such circumstances substantially all the hot water of the central heating system will be generated from the boiler.

The boiler may be connected to a heat exchanger which may be connected to the domestic hot water storage tank.

The boiler and the heat recovery device (when present) may be connected to a flue, which may be a single, shared flue, or separate flues.

The boiler and heat recovery device may be located in a casing and the thermal storage tank and domestic hot water tank (when present) may be locked in a separate casing located as a separate unit.

According to another embodiment there is provided a heating apparatus of the embodiment connected to at least one hot water circulation system.

According to a second aspect of the invention there is provided a method of heating water comprising the features of claim 6.

The method may comprise connecting the thermal storage tank to a hot water circulation system, which may be a domestic hot water system, a domestic central heating system, or in preferred embodiments both a domestic hot water system and a domestic central heating system.

The method may comprise circulating heated water from the thermal storage tank through a heat exchanger which heats the water circulating through a boiler, such as a condensing boiler, to further heat the water exiting preheated by the thermal storage tank.

When the method includes comprising a heat recovery device connected to a fuel cell, the method may comprise running a fuel cell continuously, in order to generate continuous fuel cell heat. Any low or volatile heat source may be run continuously.

An air pocket may be provided at the top of the thermal storage tank. A vent point may be provided in the thermal storage tank.

The thermal storage tank and domestic hot water tank may be stacked. In one embodiment the domestic hot water tank is provided above the thermal storage tank.

It is desirable to maintain an air pocket at the top of the lower thermal storage tank to minimise heat transfer between the thermal storage tank and domestic hot water tank. Account should be taken of the compression of this air pocket when the system is pressurised. In one embodiment, when pressurised the air pocket is not reduced to the point that the convex bottom of the upper domestic hot water tank is in direct contact with the water in the lower thermal storage tank. The air pocket size may be increased by lowering the vent point on the lower thermal storage tank cylinder. One construction involves not close coupling the two tanks and in effect stacking them on top of each other, optionally with tank insulation in between.

### Detailed description of the invention

In order that the invention may be more clearly understood, embodiments thereof will now be described by way of example only, with reference to the accompanying drawings, of which:
Figure 1 illustrates a schematic of a thermal store apparatus and heating system of the invention;
Figure 2 illustrates a schematic of a second embodiment of a thermal store apparatus and heating system of the invention; and
Figure 3 illustrates a schematic of a third embodiment of a thermal store apparatus and heating system of the invention.

In the Figures, like numerals represent like or identical components.

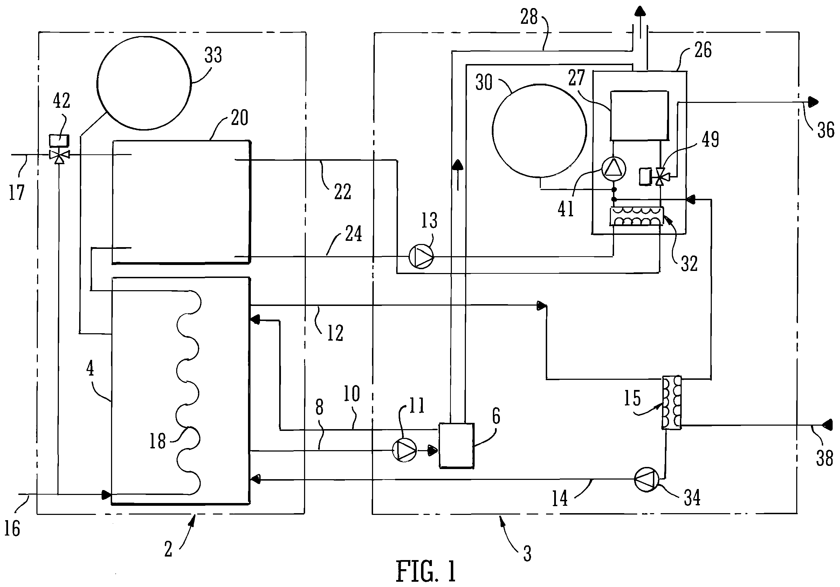

Referring firstly to Figure 1, a thermal store apparatus (2) is part of a heating system (3). The thermal store apparatus includes a thermal storage tank (4) filled with water and a fuel cell waste heat recovery device (WHR) (6). The thermal storage tank (4) and waste heat recovery device (6) are connected via a circuit comprising a first water outlet (8) and first water inlet (10), which extend through the waste heat recovery device (6). The first water outlet (8) and first water inlet (10) are positioned such that the first water outlet (8) is located towards the lower region of the thermal storage tank (4), no more than 25% from the bottom and the first water inlet (10) is located in an upper region of the thermal storage tank (4), no more than 25% from the top. Water is pumped around the circuit between the thermal storage tank (4) and waste heat recovery device (6) via a pump (11). In use, colder water at the bottom of the thermal storage tank (4) is pumped through the waste heat recovery device (6), where heat is transferred to the water, which is then pumped and returned to the upper region of the thermal storage tank (4), via the first water inlet (10). In this way the water in the tank becomes stratified, with heated water layers towards the top of the tank (4), and colder water layers towards the bottom of the tank (4). This stratification is maintained so that there is relatively little reduction in the effectiveness in transport of heat from the heat recovery device (6), compared to conventional thermal stores having multiple heat inputs, and less energy is lost to the environment. The thermal store apparatus (2) is part of a heating system (3) which also includes a domestic hot water circuit and a storage heating circuit (central heating). The domestic hot water circuit comprises a cold water inlet (16), which extends into a coil pipe (18), extending through the thermal storage tank (4), and exiting into a domestic hot water tank (20). The domestic hot water tank (20) includes a hot water outlet pipe (17), which is also connected to mixing valve (42), which enables mixing of cold water from the cold water inlet (16) and hot water exiting from the domestic hot water tank (20). The thermal storage tank (4) also includes an expansion chamber (33). The thermal storage tank (4) is also connected to a conventional boiler (26) via a plate heat exchanger (15), for preheating the central heating circuit water, a heat exchanger (27) for heating the central heating circuit water and a diverter valve (49) which diverts water from the boiler to either the central heating circuit or the heat exchanger (32) for heating the DHW store. The thermal storage tank (4) and boiler (26) are connected via a hot water divert inlet (14) and hot water divert outlet (12) through which water is pumped via pump (34). The pump (34) takes heated water from the thermal storage tank (4), via a plate heat exchanger, (15), before returning it to the bottom of the thermal storage tank (4). Water returning from the central heating system in the return pipe (38) is then heated by the plate heat exchanger (15) and the water is then circulated through the conventional condensing boiler (26), where, if required, additional heating is provided via the heat exchanger (27). Heated water exiting the boiler (26) to the central heating circuit, exits via a central heating flow outlet (36) and is returned via central heating return (38) which is connected to the heat exchanger (15). The boiler (26) includes an expansion vessel (30), and both the boiler (26) and heat recovery device (6) are connected to a flue (28), which exhaust flue gases safely outside of the building in which the thermal store apparatus (2) and heating system (3) are installed.

The domestic hot water tank (20) is also operably connected to the boiler (26) via a plate heat exchanger (32) and hot water divert inlet (22) and hot water divert outlet (24), which are part of a circuit actuated by a pump (13), . When a reduced temperature is detected in the domestic hot water tank (20) the boiler (26) heats water in the heat exchanger (27). This water is circulated by pump (41) via valve (49) to the plate heat exchanger (32). The cooler water from the bottom of the domestic hot water tank (20) is then circulated by pump (13) through pipe (24) to the plate heat exchanger (32) where it is heated by the water from the boiler (26) before returning to the top of the domestic hot water tank (20) through pipe (22).

In use, waste heat from the main fuel cell (not shown) is captured by water circulated through the waste heat recovery device (6) via pump (11). The water is taken from the thermal store (4), with the coolest water taken from the bottom of the tank, and the returned heated water deposited in the top of the tank. No other heat sources are used to heat the thermal storage tank (4). The energy stored in the thermal storage tank (4) is then used as priority for heating domestic hot water and central heating via the hot water and central heating circuits of the heating system (3). When a demand for central heating is received the pump (41) circulates water through the central heating circuit. Water from the central heating circuit enters the central heating return (38). If usable energy is available in a thermal storage tank (4), then the pump (34) is activated. The pump (34) takes hot water from the thermal storage tank (4) and heats the central heating return water via the plate heat exchanger (15). This water is then circulated through the boiler (26), where if required, additional heating is provided. A diverter valve (18) directs the heated water to the central heating outlet (36). This flow will be used typically to heat devices such as radiators. When the temperature of the water taken from the thermal store and circulating through the central heating circuit drops to the temperature of the central heating return (38) water the pump (34) is stopped and any continued heating is provided solely by the boiler (26).

The thermal storage tank (4) is also used to provide hot water for the domestic hot water tank (20) in the following way. When domestic hot water is needed from the heating system (3), it is taken from the domestic hot water flow outlets (17). This water is replenished by the cold water inlet (16) connected to the water mains or a header tank. Cold water from the cold water inlet (16) passes through the thermal storage tank (4) via the coil (18). Whilst passing through the thermal storage tank (4), the water is heated depending on how hot the water in the thermal storage (4) is. The heated water then passes into the domestic hot water tank (20) which is maintained at a constant temperature (typically 70°C) by the condensing boiler (26). If water entering the domestic hot water storage tank (20) from the thermal storage tank (4) causes the existing water to cool then the pump (13) will run and the boiler (26) will fire. The cooler water is then taken from the bottom of the domestic hot water storage tank (20) and heated by the plate heat exchanger (32) in the boiler (26), before being returned to the top of the domestic hot water storage tank (20). The hot water from the domestic hot water storage tank (20) is then mixed with cold water via the mixing valve (42) to achieve the desired temperature.

It can be seen from the description above, that the thermal storage apparatus (2) of the invention enables a relatively low energy heat source such as fuel cell, to transfer heat to a body of water in a thermal store in an efficient manner, compared to conventional thermal store apparatus, and which heated water can be used to heat domestic (or commercial) hot water and storage heating, or alternative be a supplement to existing conventional heating apparatus such as boilers and the like.

The energy output from the heat recovery device (6) depends on how cool the water is from the thermal storage tank (4). With a relatively cold thermal storage tank (4), the energy recovered is significant. The boiler (26) will be sized depending on the demand of the property to be heated by the heating system (3), or will typically be between 15 and 24kW.

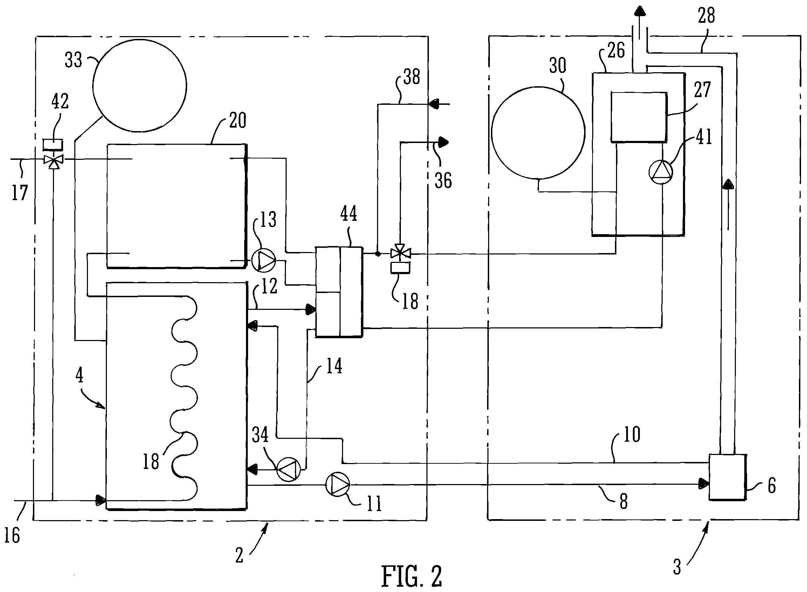

Referring to Figure 2, this shows a second embodiment of the thermal store apparatus and heating systems of the invention. Like numerals represent like components, and the principle of operation is the same as that given for the embodiments in Figure 1, except that the system is hydraulically simplified by the introduction of a three-fluid plate heat exchanger (44), which replaces the plate heat exchangers (32) and (15) from Figure 1. In the embodiments shown in Figure 2, in domestic hot water mode, the plate heat exchanger (44) is used to deliver energy from the boiler (26) to the domestic hot water storage tank (20). In central heating mode when useful energy is available in the thermal storage tank (4), the plate heat exchanger (44) is used to deliver energy from the thermal storage tank (4) to the central heating return (38).

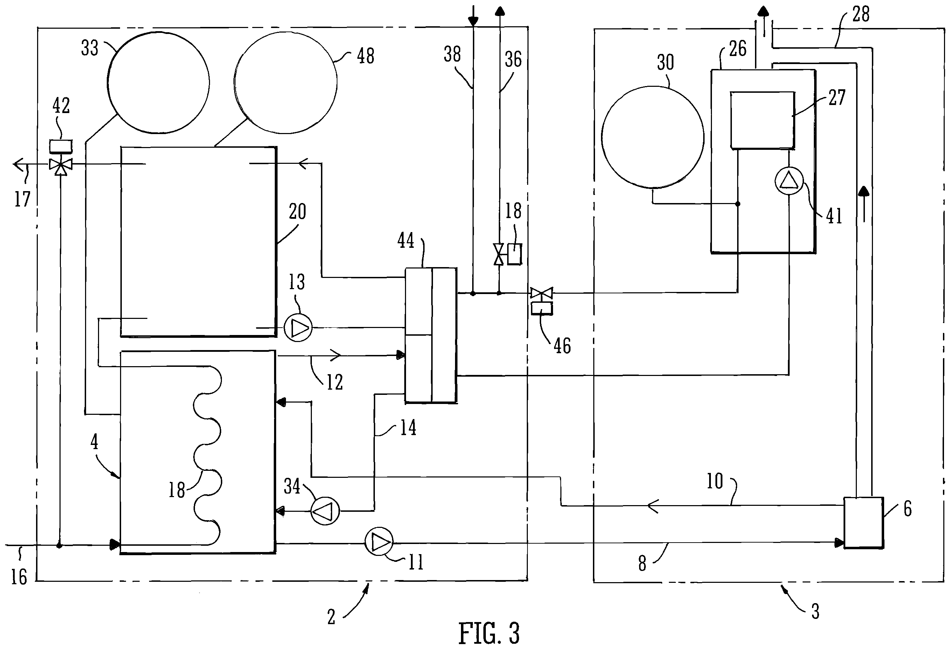

Referring now to Figure 3, a third embodiment of a thermal store apparatus (2) and heating system (3) is almost identical to that of Figure 2, with exception that the three-fluid plate and heat exchanger (44) is connected to two 2- port valves (18, 46) rather than a single 3- port valve.

In other embodiments the heat recovery device (6) can be replaced with a connection to a solar heat system, or other low or variable heat source such as a geothermal, tidal or wind-based heat source. The solar heat system may include solar panels known to those skilled in the art which collect and absorb energy from the sun and output heat.

The above embodiments are described by way of example only. Many variations are possible without departing from the scope of the invention as defined in the appended claims.

## Claims

1. A thermal store apparatus comprising a thermal storage tank (4) with a thermal storage tank first water inlet (10) and a thermal storage tank first water outlet (8), arranged in use to be filled with water, a low or variable heat source (6) and further comprising a water circulation system which in use circulates water in the tank (4) from the thermal storage tank first water outlet (8) located at the lower 25% of the thermal storage tank, through the low or variable heat source (6) where heat is transferred to water in the circulation system and the heated water is returned to an upper region of the thermal storage tank (4) via the thermal storage tank first water inlet (10), wherein the thermal storage tank (4) comprises a cold water inlet (16), a domestic hot water outlet and a heat transfer conduit (18) therethrough, connected at either end to the cold water inlet (16) and the domestic hot water outlet, and wherein the thermal store apparatus further comprises a domestic hot water storage tank (20) that is separate from the thermal storage tank (4) and connected to the domestic hot water outlet, **characterized in that** the thermal storage tank first water inlet (10) is located at the upper 25% of the thermal storage tank (4), and **in that** the heated water returned to the thermal storage tank (4) from the low or variable heat source (6) is the sole means to heat water in the thermal storage tank (4).

2. A thermal store apparatus as claimed in claim 1 , wherein the low or variable heat source (6) is selected from a heat recovery device, a fuel cell, a geothermal source, a wind source, a tidal source and a solar heat source, and optionally wherein the heat recovery device is connected to a fuel cell.

3. A thermal store apparatus as claimed in claim 1 or claim 2 wherein the water circulation system comprises a pump (11) arranged in use to pump water from the first water outlet of the storage tank, through the low or variable heat source and is returned to the first water inlet of the storage tank.

4. A thermal store apparatus as claimed in claim 1, wherein the domestic hot water outlet is connected to the lower region of the domestic hot water storage tank.

5. A heating apparatus comprising a boiler (26) and the thermal store apparatus of any one of claims 1 to 3 connected to the boiler, optionally connected to at least one hot water circulation system.

6. A method of heating water comprising;
a) providing a thermal storage tank (4) filled with water and having a heat transfer conduit (18) therethrough;
b) providing a domestic hot water storage tank (20) separate from the thermal storage tank (4) and connecting the domestic hot water storage tank (20) to a domestic hot-water outlet;
c) connecting the thermal storage tank (4) to a low or variable heat source (6); and
d) circulating water from the thermal storage tank (4) through the low or variable heat source (6);
wherein water in the thermal storage tank (4) is circulated from a thermal storage tank first water outlet (8) located at the lower 25% of the thermal storage tank (4) through the low or variable heat source (6) where heat is transferred to water and the heated water is returned to an upper region of the thermal storage tank (4) via a thermal storage tank first water inlet (10) located at the upper 25% of the thermal storage tank (4) and wherein cold water from a domestic supply passes through the heat transfer conduit (18) to the domestic hot water outlet and the heated water returned to the thermal storage tank (4) from the low or variable heat source (6) is the sole means to heat water in the thermal storage tank

7. A method as claimed in claim 6 further comprising connecting the thermal storage tank (4) to a hot water circulation system

8. A method as claimed in claim 6 or claim 7 further comprising circulating heated water from the thermal storage tank (4) through a heat exchanger (32) to preheat a central heating circuit before pumping the water to a boiler (26) which can further heat the water in the central heating circuit exiting the thermal storage tank.

9. A method as claimed in claim 6 wherein the domestic hot water outlet of the heat transfer conduit (18) circulates water into a lower region of the domestic hot water storage tank (20).

10. A method as claimed in claim 6, wherein if it is detected that there is insufficient hot water in the thermal storage tank (4), or the water is not hot enough, cooler water from the bottom of the domestic hot water storage tank (20) is circulated through a boiler (26).

## Patentansprüche

1. Thermalspeichervorrichtung, aufweisend einen Thermalspeichertank (4) mit einem ersten Thermalspeichertank-Wassereinlass (10) und einem ersten Thermalspeichertank-Wasserauslass (8), der im Gebrauch so angeordnet ist, dass er mit Wasser gefüllt werden kann, eine schwache oder variable Wärmequelle (6) und ferner aufweisend ein Wasserzirkulationssystem, das im Gebrauch Wasser in dem Tank (4) von dem ersten Thermalspeichertank-Wasserauslass (8), der sich an den unteren 25% des Thermalspeichertanks befindet, zirkulieren lässt, durch die schwache oder variable Wärmequelle (6) zirkuliert, wobei die Wärme auf das Wasser in dem Zirkulationssystem übertragen wird und das erwärmte Wasser über den ersten Thermalspeichertank-Wassereinlass (10) in einen oberen Bereich des Tanks (4) zurückgeführt wird, wobei der Thermalspeichertank (4) einen Kaltwassereinlass (16), einen Brauchwarmwasserauslass und eine Wärmeübertragungsleitung (18) aufweist, die an beiden Enden mit dem Kaltwassereinlass (16) und dem Brauchwarmwasserauslass verbunden ist, und wobei die Thermalspeichervorrichtung ferner einen Brauchwarmwasserspeichertank (20) aufweist, der von dem Thermalspeichertank (4) getrennt ist und mit dem Brauchwarmwasserauslass verbunden ist, **dadurch gekennzeichnet, dass** der erste Thermalspeichertank-Wassereinlass (10) an den oberen 25 % des Thermalspeichertanks (4) angeordnet ist und dass das erwärmte Wasser, das von der schwachen oder variablen Wärmequelle (6) in den Thermalspeichertank (4) zurückgeführt wird, das einzige Mittel zum Erwärmen des Wassers im Thermalspeichertank (4) ist.

2. Thermalspeichervorrichtung nach Anspruch 1, wobei die schwache oder variable Wärmequelle (6) aus einer Wärmerückgewinnungseinrichtung, einer Brennstoffzelle, einer Geothermalquelle, einer Windkraftanlage, einer Gezeitenkraftquelle und einer Solarwärmequelle ausgewählt ist, und wobei die Wärmerückgewinnungseinrichtung optional mit einer Brennstoffzelle verbunden ist.

3. Thermalspeichervorrichtung nach Anspruch 1 oder Anspruch 2, wobei das Wasserzirkulationssystem eine Pumpe (11) aufweist, die im Gebrauch so angeordnet ist, dass sie Wasser vom ersten Wasserauslass des Tanks durch die schwache oder variable Wärmequelle pumpt und zum ersten Wassereinlass des Tanks zurückführt.

4. Thermalspeichervorrichtung nach Anspruch 1, wobei der Brauchwarmwasserauslass mit dem unteren Bereich des Brauchwarmwasserspeichertanks verbunden ist.

5. Heizvorrichtung, aufweisend einen Boiler (26) und die Thermalspeichervorrichtung nach einem der Ansprüche 1 bis 3, die mit dem Boiler verbunden ist und optional an mindestens ein Warmwasserzirkulationssystem angeschlossen ist.

6. Verfahren zum Erhitzen von Wasser aufweisend;
a) Bereitstellen eines Thermalspeichertanks (4), der mit Wasser gefüllt ist und eine Wärmeübertragungsleitung (18) durch ihn hindurch aufweist;
b) Bereitstellung eines vom Thermalspeichertank (4) getrennten Brauchwarmwasserspeichertanks (20) und Anschluss des Brauchwarmwasserspeichertanks (20) an einen Brauchwarmwasserauslass;
c) Anschluss des Thermalspeichertanks (4) an eine schwache oder variable Wärmequelle (6), und
d) Umwälzen von Wasser aus dem Thermalspeichertank (4) durch die schwache oder variable Wärmequelle (6); wobei Wasser in dem Thermalspeichertank (4) von einem ersten Thermalspeichertank-Wasserauslass (8), der sich an den unteren 25 % des Thermalspeichertanks (4) befindet, durch die schwache oder variable Wärmequelle (6) zirkuliert wird, wo Wärme auf Wasser übertragen wird, und das erwärmte Wasser über einen ersten Thermalspeichertank-Wassereinlass (10), der sich an den oberen 25 % des Thermalspeichertanks (4) befindet, in einen oberen Bereich des Thermalspeichertanks (4) zurückgeführt wird und wobei Kaltwasser aus einem Hausanschluss durch die Wärmeübertragungsleitung (18) zum Brauchwarmwasserauslass fließt und das erwärmte Wasser, das von der schwachen oder variablen Wärmequelle (6) in den Thermalspeichertank (4) zurückgeführt wird, das einzige Mittel zur Erwärmung des Wassers im Thermalspeichertank ist.

7. Verfahren nach Anspruch 6, das ferner den Anschluss des Thermalspeichertanks (4) an ein Warmwasserzirkulationssystem aufweist.

8. Verfahren nach Anspruch 6 oder 7, das ferner aufweisend ist, dass erwärmtes Wasser aus dem Thermalspeichertank (4) durch einen Wärmetauscher (32) zirkuliert, um einen Zentralheizungskreislauf vorzuwärmen, bevor das Wasser zu einem Boiler (26) gepumpt wird, der das aus dem Thermalspeichertank austretende Wasser im Zentralheizungskreislauf weiter erhitzen kann.

9. Verfahren nach Anspruch 6, wobei der Brauchwarmwasserauslass der Wärmeübertragungsleitung (18) Wasser in einen unteren Bereich des Brauchwarmwasserspeichertanks (20) zirkulieren lässt.

10. Verfahren nach Anspruch 6, wobei, wenn festgestellt wird, dass nicht genügend heißes Wasser im Thermalspeichertank (4) vorhanden ist oder das Wasser nicht heiß genug ist, kühleres Wasser vom Boden des Brauchwarmwasserspeichertanks (20) durch einen Boiler (26) zirkuliert wird.

## Revendications

1. Installation d'accumulation de chaleur comprenant une cuve (4) d'accumulation de chaleur ayant une première entrée (10) d'eau dans la cuve d'accumulation de chaleur et une première sortie (8) d'eau de la cuve d'accumulation de chaleur, agencée pour être remplie d'eau en utilisation, une source (6) de chaleur basse ou variable et comprenant en outre un système de circulation d'eau qui, en utilisation, fait circuler de l'eau dans la cuve (4) à partir de la première sortie (8) d'eau de la cuve d'accumulation de chaleur, placée dans les 25 % inférieurs de la cuve d'accumulation de chaleur, en passant par la source (6) de chaleur basse ou variable où de la chaleur est transférée à de l'eau dans le système de circulation et l'eau chauffée est retournée à une région supérieure de la cuve (4) d'accumulation de chaleur, par l'intermédiaire de la première entrée (10) d'eau dans la cuve d'accumulation de chaleur, dans laquelle la cuve (4) d'accumulation de chaleur comprend une entrée (16) d'eau froide, une sortie d'eau chaude domestique et un conduit (18) de transfert de chaleur, qui y passe, relié aux extrémités à l'entrée (16) d'eau froide et à la sortie d'eau chaude domestique, et dans laquelle l'installation d'accumulation de chaleur comprend une cuve (20) d'accumulation d'eau chaude domestique, qui est distincte de la cuve (4) d'accumulation de chaleur et qui est reliée à la sortie d'eau chaude domestique, **caractérisée en ce que** la première entrée (10) d'eau dans la cuve d'accumulation de chaleur est placée dans les 25 % supérieurs de la cuve (4) d'accumulation de chaleur et **en ce que** l'eau chauffée retournée à la cuve (4) d'accumulation de chaleur à partir de la source (6) de chaleur basse ou variable est le seul moyen pour chauffer de l'eau dans la cuve (4) d'accumulation de chaleur.

2. Installation d'accumulation de chaleur suivant la revendication 1, dans laquelle la source (6) de chaleur basse ou variable est choisie parmi un dispositif de récupération de la chaleur, une pile à combustible, une source géothermique, une source éolienne, une source par marée, une source de chaleur solaire, et dans laquelle éventuellement le dispositif de récupération de la chaleur est relié à une pile à combustible.

3. Installation d'accumulation de chaleur suivant la revendication 1 ou la revendication 2, dans laquelle le système de circulation d'eau comprend une pompe (11) montée en utilisation pour pomper de l'eau de la première sortie d'eau de la cuve d'accumulation, en passant par la source de chaleur basse ou variable, laquelle est retournée à la première entrée d'eau de la cuve d'accumulation.

4. Installation d'accumulation de chaleur suivant la revendication 1, dans laquelle la sortie d'eau chaude domestique est reliée à la région basse de la cuve d'accumulation d'eau chaude domestique.

5. Installation de chauffage comprenant une chaudière (26) et l'installation d'accumulation de chaleur suivant l'une quelconque des revendications 1 à 3 reliée à la chaudière, éventuellement reliée à au moins un système de circulation d'eau chaude.

6. Procédé de chauffage de l'eau comprenant :
a) on se procure une cuve (4) d'accumulation de chaleur remplie d'eau et ayant un conduit (18) de transfert de chaleur, qui y passe ;
b) on se procure une cuve (20) d'accumulation d'eau chaude domestique distincte de la cuve (4) d'accumulation de chaleur et on relie la cuve (20) d'accumulation d'eau chaude domestique à une sortie d'eau chaude domestique ;
c) on relie la cuve (4) d'accumulation de chaleur à une source (6) de chaleur basse ou variable ; et
d) on fait circuler de l'eau de la cuve (4) d'accumulation de chaleur dans la source (6) de chaleur basse ou variable ;
dans lequel on fait circuler de l'eau dans la cuve (4) d'accumulation de chaleur, à partir de la première sortie (8) d'eau de la cuve d'accumulation de chaleur, placée dans les 25 % inférieurs de la cuve (4) d'accumulation de chaleur, en passant par la source (6) de chaleur basse ou variable, où de la chaleur est transférée à de l'eau et l'eau chauffée est retournée à une région supérieure de la cuve (4) d'accumulation de chaleur, par l'intermédiaire d'une première entrée (10) d'eau dans la cuve d'accumulation de chaleur placée dans les 25 % supérieurs de la cuve (4) d'accumulation de chaleur, et dans lequel de l'eau froide d'une alimentation domestique passe dans le conduit (18) de transfert de chaleur à la sortie d'eau chaude domestique et l'eau chauffée retournée à la cuve (4) d'accumulation de chaleur à partir de la source (6) de chaleur basse ou variable est le seul moyen pour chauffer de l'eau dans la cuve d'accumulation de chaleur.

7. Procédé suivant la revendication 6, comprenant en outre relier la cuve (4) d'accumulation de chaleur à un système de circulation d'eau chaude.

8. Procédé suivant la revendication 6 ou la revendication 7, comprenant en outre faire circuler de l'eau chauffée de la cuve (4) d'accumulation de chaleur, en passant par un échangeur de chaleur (32) pour préchauffer un circuit de chauffage central, avant de pomper l'eau à une chaudière (26), qui peut chauffer davantage l'eau dans le circuit de chauffage central, sortant de la cuve d'accumulation de chaleur.

9. Procédé suivant la revendication 6, dans lequel la sortie d'eau chaude domestique du circuit (18) de transfert de chaleur fait circuler de l'eau dans une région basse de la cuve (20) d'accumulation d'eau chaude domestique.

10. Procédé suivant la revendication 6, dans lequel, s'il est détecté qu'il y a insuffisamment d'eau chaude dans la cuve (4) d'accumulation de chaleur ou si l'eau n'est pas assez chaude, on fait circuler, dans la chaudière (26), de l'eau plus froide provenant du fond de la cuve (20) d'accumulation d'eau chaude domestique.
